# EUROPEAN PATENT APPLICATION

(11) **EP 4 657 369 A1**
(43) Date of publication of application: **03.12.2025**
(21) Application number: 24179326.4
(22) Date of filing: 31.05.2024
(51) Int. Cl.: G06T 7/00

(54) **WORKPIECE MONITORING AND CONTROL FOR AUTOMATED WELDING SYSTEMS**

(71) Applicant: Norsk Titanium AS, 3514 Hønefoss (NO)
(72) Inventor: Zamiri, Reza, 1465 Strømmen (NO)
(74) Representative: Acapo Onsagers AS

(57) **Abstract**

A computer-implemented method (300) for monitoring a workpiece (118) being manufactured using an automated welding system (100). These technologies can real-time monitor, read, or interrogate a workpiece or a substrate on which the workpiece is positioned, as the workpiece is moved past a directed energy source, or vice versa. The method can be used with an automated welding system for standoff distance monitoring and control, which can be responsive, dynamic, and in real-time. These technologies can use a feedback controller to responsively and dynamically control the standoff distance in real-time based on data from the standoff distance measurement system.

## Description

### Technical Field

Aspects of this disclosure relate to a computer-implemented method for monitoring a workpiece, a controller configured to perform the method, a workpiece monitoring system comprising the controller, an automated welding system comprising the controller or the workpiece monitoring system, and a computer-readable medium for causing a computer to carry out the method.

### Background

Automated welding is a growing technical field in which welding processes are performed under computer control. Automated welding processes can be used to join two parts of a workpiece, to perform repairs on an existing workpiece, or to create a new workpiece. A new workpiece may be created using additive manufacturing. Additive manufacturing can be performed using a variety of processes in which materials are deposited, joined, or solidified under computer control, with the material being added together layer by layer.

For automated welding operations, the workpiece may be monitored to ensure that tools of the automated welding system are correctly positioned relative to the workpiece, so that the correct part of the workpiece is being worked on and/or so that the welding is performed effectively. Monitoring can also be performed to provide quality control and/or defect detection both during and/or after manufacturing.

Laser profiling may be implemented, where a laser line scanner profile provides a three-dimensional profile measurement.

However, such laser profiling is associated with problems relating to noise and sensitivity to variations, especially when high reflective metals are used in the welding process. During manufacturing, the welding tools and processes employed may cause intensive light emission that impairs the laser line scanner profile measurement by reducing the signal-to-noise ratio or by causing reflections that make it difficult to distinguish where the true laser line is. As a result, the measurement performance may suffer from a lack of accuracy such that a real time use is rendered difficult. To improve the signal-to-noise ratio of the laser line scanner with respect to the light emission from the welding tools and processes, such as plasma arc emission, the intensity of the laser light may be increased. However, the interaction of the strong laser light with the metal surface introduced unwanted reflections, impairing again the signal quality. In turn, reduced signal quality can reduce how precisely automated welding can be performed. Even after the workpiece is manufactured, such reflections may still cause problems, making it difficult to identify any defects accurately.

In an example, a rapid plasma deposition (RPD^{®}) additive manufacturing system can host an inert gas environment containing a wire and a plasma torch. The RPD^{®} additive manufacturing system may manufacture a workpiece based on the plasma torch controllably directing a plasma arc at the wire and the plasma arc melting the wire to form the workpiece, layer-by-layer, as the workpiece is controllably moved past the plasma torch or vice versa within the inert gas environment.

During such operations, a standoff distance (e.g. along vertical axis) may be maintained between the plasma torch and the workpiece. The standoff distance may determine the plasma arc resistance and thereby the plasma arc power and characteristics (e.g. for constant plasma arc current supplied by constant current power supply). It may be useful to maintain the standoff distance at a desired or predetermined standoff distance, and to avoid standoff distance deviations. There are various factors which may lead to standoff distance deviations, such as substrate distortion, uneven deposit surface (e.g. due to wire movement), uneven workpiece height step, workpiece features (e.g. joints, ends, intersections), and other complex process variations.

The precision of the standoff distance affects the resolution by which the matter is deposited, i.e. the precision of the desired shape of the workpiece. The higher the precision of the standoff distance, the higher the resolution of the desired workpiece and finally the better the workpiece quality. The term "resolution" in this regard means that the matter to be deposited in the method of manufacturing is found precisely at the spot where the matter was intended to be deposited.

Where a laser line scanner may be used to determine the standoff distance during such RPD^{®} additive manufacturing, reflections from the workpiece due to the laser line scanner and the plasma arc can impact how precisely the standoff distance can be determined and may slow down the determinations. These issues subsequently cause reduced precision in control of the plasma torch and workpiece, meaning that distortions or defects may be introduced into the workpiece.

### Description

Aspects of the disclosure are provided by the subject-matter of the appended claims.

According to a first aspect, there is provided a computer-implemented method for monitoring a workpiece being manufactured by an automated welding system. The computer-implemented method comprises: causing an optical signal to be emitted from a signal emitter onto a surface of the workpiece, the optical signal indicating a section of the workpiece; obtaining data relating to the surface of the workpiece from a signal detector, the data includes one or more reflections from the surface of the workpiece; determining a desired component of the data using a machine-learned model, wherein the desired component comprises a reflection of the one or more reflections that corresponds to the optical signal indicating the section of the workpiece; and determining one or more geometric properties of the section based on the desired component of the data.

A machine-learned model, which may be referred to as a machine-learning model, is a model that has been trained or configured using a machine-learning algorithm for a specific purpose, which in this case is at least for determining a desired component of data relating to a workpiece. A machine-learned model is trained using training data and the machine-learning algorithm. Machine-learned models may be validated using validation data.

Using the machine-learned model may provide greater precision in determining geometric properties of a workpiece than may otherwise be possible, because a machine-learned model may better parse the data from the signal detector than other rules-based algorithms. Accordingly, utilizing a machine-learned model as part of determining geometric properties allows improved monitoring and/or manufacturing of a workpiece. This can provide a greater precision, resolution, and therefore quality of a workpiece being manufactured. Improved quality may reduce waste in the manufacturing process as it may result in a workpiece with fewer defects.

Using the machine-learned model may enable greater automation of manufacturing, requiring less human intervention and/or increasing overall speed of manufacture of a workpiece. Such techniques may also reduce damage to the workpiece or manufacturing systems, because improved parameters for manufacturing, such as a standoff distance, can be achieved and maintained.

The computer-implemented method may be for monitoring a workpiece being manufactured by an automated welding system. Alternatively, or additionally, the computer-implemented method may be for monitoring a workpiece manufactured by an automated welding system or a workpiece to be welded, repaired, or further manufactured by an automated welding system. The computer-implemented method may be used for monitoring a workpiece that has been manufactured using a manual welding process, such as for quality control or defect detection. The computer-implemented method may be used to generate a three-dimensional model of the workpiece. The quality of a workpiece can be improved, because improved monitoring of the workpiece is achieved.

The computer-implemented method may comprise controlling the automated welding system based on the one or more geometric properties. The computer-implemented method may be performed while the automated welding system is being controlled to perform an automated welding process, such that the geometric properties are being used as feedback to the actions of an automated welding system. Thus, high-precision manufacturing in real-time using an automated welding system can be achieved.

The computer-implemented method may comprise storing the one or more geometric properties in memory and/or displaying the one or more geometric properties on a display for an operator.

The workpiece may be being manufactured using a welding tool such as a directed energy source. The directed energy source may be a source of plasma, thermal energy, acoustic energy, electrical energy, or a combination thereof. The directed energy source may be a laser, a plasma torch or a flame torch, for example.

The workpiece may be directly mounted on the substrate. The workpiece may be indirectly mounted on the substrate. In other words, another workpiece may function as the substrate, and that workpiece may be directly mounted on the substrate. The workpiece may be a plate, a forged part, a printed part, or part made with any other technology, such as additive manufacturing or subtractive manufacturing. The surface of the workpiece being monitored may be a part of the workpiece not in contact with the substrate.

The method includes using an optical signal to indicate or illuminate a section of the surface of the workpiece. The optical signal reflects from the surface and can be recorded by the signal detector. An optical signal may be a visible light signal, an infrared signal, or an ultraviolet signal. The optical signal may be a laser signal, such as a laser line signal. The optical signal may have a predefined geometric pattern, such as a laser line. The desired component may comprise a reflection of the predefined geometric pattern from the surface of the workpiece. The optical signal may be moved across the surface of the workpiece to create the predefined geometric pattern, such as moving a laser point across a profile of the workpiece to create a line. Causing the optical signal to be emitted may comprise controlling the signal emitter to emit the optical signal. The optical signal may be caused to be emitted according to known techniques. A plurality of signal emitters may be provided configured to output the optical signal or to each emit a different optical signal.

A section of a workpiece may be a part of the workpiece having a particular cross-section. The section may be referred to as a profile of the workpiece. A section of a workpiece may be a region of the workpiece having several cross-sections. The workpiece may comprise a plurality of sections. The workpiece may be divided into sections along an axis of the workpiece, such that each section represents a slice or portion of the workpiece intersecting and perpendicular to the axis. The section may be perpendicular to a substrate on which the workpiece is provided. The optical signal may indicate the section by illuminating the surface of the workpiece that forms part of the section. In other words, the optical signal may illuminate or be projected or emitted onto a profile of the workpiece.

Obtaining the data may comprise receiving the data from the signal detector. The signal detector may be an optical detector, such as a camera, and the data may be optical data. The data may be image data or may form one or more images. The data may comprise an image frame or a plurality of frames. An array of signal detectors may be provided, and the detectors of the array may each be configured to detect data relating to the surface of the workpiece. Detectors of the array may be positioned differently to detect different data relating to the surface of the workpiece. The signal detector may comprise an array of sensors. The data relating to the surface of the workpiece may be obtained from the signal detector according to known techniques.

The data may include a plurality of reflections from the surface of the workpiece. The reflections may be specular or caustic reflections. Some of the plurality of reflections may be undesired components of the data. At least one of the reflections is a desired component of the data. The machine-learned model may be configured to distinguish between the desired component of the data and the undesired component of the data.

The machine-learned model may be configured to receive, as input data, the data relating to the surface of the workpiece or the machine-learned model may be configured to receive, as input data, pre-processed data relating to the surface of the workpiece. In the latter case, the method may comprise pre-processing the data relating to the surface of the workpiece for providing to the machine-learned model as input data. The input data may be one or more image frames.

The machine-learned model may be configured to process the input data relating to the workpiece and to output processed data representative of, indicating, or that is the desired component. In other words, the machine-learned model may have been trained to receive input data based on the data relating to the surface of the workpiece, to process the input data, and to output processed data representative of, indicating, or that is the desired component. The machine-learned model may be configured to receive an image frame, process the image frame, and provide processed output data. Subsequently, the machine-learned model may receive a further image frame and perform the same process, such that the machine-learned model provides a stream of output data for analysis to determine the one or more geometric properties.

The desired component may be a feature of the data relating to the workpiece from which the one or more geometric properties can be determined. Determining the desired component of the data relating to the workpiece using the machine-learned model may comprise processing the input data. Processing the input data may include reducing or rejecting noise in the data or reducing or rejecting unwanted or undesired components of the data. Processing the data relating to the workpiece may include identifying the desired component of the data. The machine-learned model may be configured to receive input data in the form of image data and to provide output data in the form of image data.

References to "data" hereafter are to the data relating to the surface of the workpiece unless otherwise indicated, while the term "data relating to the surface of the workpiece" relates to data gathered during monitoring of the workpiece. Accordingly, the data may relate directly or indirectly to the workpiece. The data may, for example, include features of the wider system, such as the substrate, or artefacts caused by the wider system or the manufacturing process, such as reflections from other components of the system or glare caused by a welding tool. The data relating to the surface of the workpiece may be image data or may be processed to provide image data for use as input data.

The machine-learned model may be an image segmentation model. Particularly, the machine-learned model may be an instance segmentation model. Put another way, the machine-learned model may determine the desired component of the data using image segmentation, which is optionally instance segmentation. Image segmentation may be useful for determining a desired component of the data because it can classify pixels within image data into distinct categories, and can enable features to be identified quickly within the data. It may therefore enable the desired component of the data to be quickly and accurately distinguished from undesired image data,. It may enable the desired component of the data to be identified where the desired component of the data is a particular signal being reflected from the workpiece, and where it is desirable to distinguish that reflected signal from other undesirable reflections. Instance segmentation may enable differentiation between components of image data that are of the same type; in other words, where a reflection of a signal is being detected from the workpiece, instance segmentation may enable differentiation between different reflections from the workpiece. Accordingly, noise or unwanted data can be separated from desired data.

The machine-learned model may be a single-stage model. Utilizing a single-stage model, such as YOLO, may enable fast detection of at least the desired component within the data while maintaining accuracy. Enabling fast detection may be useful where real-time data is received and where the process is dependent upon precise and fast operation of an automated welding system to enable manufacturing to continue. One or more hyperparameters of the machine-learned model may be adjusted to maintain high speed. For example, the machine-learned model may be configured to provide an indication of the desired component within 0.025 seconds, which corresponds to 40 Hz. Such a machine-learned model operating at a rate of approximately 40 Hz may enable its use in real-time monitoring and manufacturing processes. In other examples, the machine-learned model may provide an indication of the desired component within 0.01 seconds, within 0.02 seconds, within 0.03 seconds, within 0.04 seconds, within 0.05 seconds, or within 0.1 seconds. Speed may be prioritised over accuracy to ensure that real-time processing is maintained.

The machine-learned model may be a deep learning model. The machine-learned model may comprise a trained convolutional neural network (CNN). The machine-learned model may be obtained by training a convolutional neural network. Training may comprise supervised learning using a training data set. The training data set may comprise training data relating to a plurality of real workpieces. The training data may comprise a plurality of images of the surfaces of workpieces taken during manufacturing by automated welding, and particularly during additive manufacturing. During the welding process, a plurality of images may be obtained and stored in memory for use as training data. To build a robust model, a predetermined number of images may be collected, such as 500 images, 1000 images, 2000 images or more than 2000 images. The training data may comprise images relating to a plurality of different workpieces. In some examples, training data may comprise images relating to a single workpiece throughout a manufacturing process.

The training data may comprise a plurality of images of the surfaces of workpieces taken while an optical signal is being emitted onto the surfaces but while no manufacturing using automated welding is taking place. In other words, training data may be generated by operating a signal scanner, such as a laser line scanner, to emit optical signals to indicate sections of a workpiece or a plurality of workpieces and detecting those optical signals either during or separately from an automated welding process or system.

The training data may include reflections that form undesired components of the data, as well as desired components of the data. Training data may comprise one or more labels for each image. The training data may be generated by labelling a desired component within each image. The machine-learned model may be configured or trained to determine a plurality of components of the data including the desired component of the data and one or more undesired components of the data. The machine-learned model may be configured or trained to determine or indicate the desired component of the data from among the plurality of components of the data. Determining or indicating the desired component may comprise providing a prediction of the desired component.

Determining the desired component of the data using the machine-learned model may comprise providing the data to the machine-learned model. Determining the desired component of the data using the machine-learned model may comprise receiving, from the machine-learned model, the data and an indication of a location of the desired component of the data from the machine-learned model. The data and the indication may be combined, for example, into a single image.

The indication of the location of the desired component of the data may comprise an annotation, data that has been filtered to suppress or remove undesired components of the data, extracted data, or numerical values relating to the desired component of the data. The machine-learned model may output an annotated image, a filtered image, or an extracted image or representation of the desired component as the indication of the desired component. The machine-learned model may output a confidence score associated with a plurality of components of the data. The desired component may be the component of the data having the highest associated confidence score. The indication of the location may comprise a pixel location or locations within an image. The indication may comprise a string of locations.

An annotated image may be a version of the image that was input to the machine-learned model with at least one annotation indicating the desired component of the data. The annotation may be an outline of a signal or reflection, or may be an area occupied by the signal or reflection. The annotation may comprise a label associated with the desired component. The annotation may indicate the desired data in a different colour to annotations indicating undesired components. Undesired components may not be annotated at all.

A filtered image may be an image that has been filtered to remove or substantially remove undesired components of the data so that the desired component remains.

After determining the desired component, one or more geometric properties are determined. Geometric properties of the section of the workpiece may include measurements of the section within a reference system or relative to a reference point. A geometric property of the workpiece may be a dimension of the workpiece relative to, for example, a substrate on which the workpiece sits, or a distance measurement relative to a reference point of the automated welding system. A geometric property may be a position within a coordinate space or reference system formed of one or more distances or dimensions. As an example, a physical position relative to the signal detector or a reference point associated with and having a known spatial relationship with the signal detector may be determined. The physical position may comprise a vertical distance of the point from the signal detector or reference point, a horizontal distance from the signal detector or reference point, or both. In the computer-implemented method, determining the one or more geometric properties of the section may therefore comprise determining a physical position of each of a plurality of points on the surface of the section relative to a reference point based on the desired component of the data.

A geometric property may be determined for each of a plurality of points of the section of the workpiece. For example, the geometric property may be determined for a plurality of points along the workpiece illuminated or indicated by the optical signal. The points may correspond to indications of locations of desired data output by the machine-learned model. In other words, determining the one or more geometric property may comprise determining, for each location within an image of the surface of the workpiece indicated by the machine-learned model as corresponding to the desired component of the data, a geometric property. The locations within a string may be analysed sequentially as found in the string to identify a geometric property.

A plurality of different geometric properties may be determined, with some geometric properties being determined based on previously determined geometric properties. For example, the one or more geometric properties may comprise a first geometric property and a second geometric property. The first geometric property may be a dimension or position relative to a first reference point such as the signal detector or a point associated therewith, and the second geometric property may be a further dimension or position determined based on the first geometric property and relative to a second reference point that is different to the first reference point and that has a known spatial relationship to the first reference point, such as a reference point associated with a welding tool.

Where a geometric property such as a dimension, distance, position, or other measurement is determined for a plurality of points, geometric properties such as a gradient of the surface, a determination of orientation of the section relative to a reference point or within a reference system, or other profile measurements may be determined. Further geometric properties may be determined such as by identifying a particular point of the plurality of points having a specific property, such as a highest point, which may be a local maxima or an overall maxima for the section, or a lowest point, which may be a local minima or an overall minima for the section.

Geometric properties of a plurality of points may be used to determine yet further geometric properties. Determining the one or more geometric properties of the section may comprise: determining a feature of the section based on the physical positions of each of the plurality of points on the surface of the section. A feature of the section may comprise a shape, or a deviation from an expected shape or form. Such features may be welding features, such as a feature of a weld bead or a feature of weld groove, which may be determined based on a characteristic shape, or a defects of the section, which may be determined based on a deviation from an expected shape of the section. Accordingly, based on the one or more geometric properties, a weld bead or a weld groove may be identified, and such identification may be used to control the automated welding system relative to the weld bead or weld groove. In quality control, a defect may be identified based on the geometric properties. Upon identification of a defect, the defect may be logged and/or an alert may be dispatched to alert an operator. If manufacturing is being performed when a defect is identified, a control command may be issued to halt manufacturing so that troubleshooting can be performed.

The feature may be a standoff point, from which a standoff distance is to be determined. The standoff point may be determined as or based on a highest point within a section relative to a reference point. The standoff point may be a point having a smallest vertical distance from the reference points. The reference point may be the reference point associated with the welding tool, such that the current standoff distance may be determined as a vertical distance of the standoff point from the reference point of the welding tool.

Accordingly, the one or more geometric properties represent at least geometric properties of points along the section that form a profile of the workpiece. Based on the properties of these points, specifically physical positions within a reference system or relative to a reference point, other geometric properties can be determined for use in controlling the automated welding system or performing validation and quality control.

In some examples, the one or more geometric properties may comprise a feature of the section, and such a feature may be determined by a machine-learned model that is different from the machine-learned model that determined the desired component. Such a machine-learned model may provide the one or more geometric properties, specifically a welding feature, an indication of a defect, or a standoff point, without indicating a physical position of points along the section. In other words, a first machine-learned model may be used to determine the desired component and a second machine-learned model that is different to the first machine-learned model may be determine the one or more geometric properties. The second machine-learned model may be a classification model, or a semantic or panoptic segmentation model. The second machine-learned model may be trained to determine the geometric properties. The second machine-learned model may, for example, be trained to determine one or more defects of the section. The one or more geometric properties may be determined by the second machine-learned model based on the output of the first machine-learned model. The output of the first machine-learned model may be provided as an input to the second machine-learned model.

Where the feature comprises the standoff point from which the current standoff distance is to be determined, the method may further comprise: determining the current standoff distance between a welding tool of the automated welding system and the point; and providing the current standoff distance to a controller for operating a mover to achieve a predefined standoff distance between the welding tool and the point based on the current standoff distance, wherein the mover is configured to move at least one of the welding tool relative to the workpiece and the workpiece relative to the welding tool.

In automated welding, and particularly additive manufacturing, a standoff distance is a distance between a welding tool, such as a directed energy source, and a workpiece. The standoff distance may be measured between a centre point of the welding tool and a point on a surface of the workpiece. The standoff distance may be a vertical distance between the tool and workpiece. As the workpiece is manufactured, the point from which the standoff distance is measured may differ, and accordingly, the standoff distance may also change.

As used herein, the term "current standoff distance" is an estimated standoff distance at a point in time as determined by a machine-learned model trained to interpret data from a signal detector. The current standoff distance may be a vertical distance between the welding tool and the workpiece. The data may be real-time data, meaning that the data is received from the signal detector as it is detected. The data may be received directly from the signal detector.

As used herein, the term "predefined standoff distance" is an intended standoff distance to be obtained or achieved during manufacturing of the workpiece. The predefined standoff distance may be kept constant throughout manufacturing. Alternatively, the predefined standoff distance may be dynamically determined based on one or more parameters. A predefined standoff distance may be or may correspond to one or more limits, corresponding to a closest or furthest distance that may be between the welding tool and the workpiece.

The mover may be referred to as a positioning system. The mover may be a motor, engine, actuator, mechanical linkage, gear mechanism, pulley mechanism, hydraulic mechanism, or pneumatic mechanism. The mover may be coupled to the substrate or to the welding tool. The mover may be configured to move the substrate and/or the directed energy source to vary at least the standoff distance between the workpiece and the welding tool. The mover may also be configured to move the substrate or the welding tool relative to one another horizontally to enable the welding tool to be directed towards different parts of the workpiece, thereby enabling automated welding to be performed.

Providing the current standoff distance to the controller for operating the mover to achieve the predefined standoff distance may be referred to as causing the controller to operate the mover based on the current standoff distance, or causing the mover to achieve the predefined standoff distance based on the current standoff distance. Providing the current standoff distance to the controller may comprise sending the current standoff distance from a workpiece monitoring system to the controller. In some examples, the controller may perform some of all of the above method. In those examples, providing the current standoff distance to the controller may comprise communicating the current standoff distance within the controller, or storing or using the current standoff distance within the controller to enable operation of the mover.

The current standoff distance may be determined based on a predefined geometric pattern of the optical signal, and particularly based on a distortion of the predefined geometric pattern over the workpiece. The signal emitter and signal detector may form part of a laser line scanner.

The indication of the desired component of the data may be used to determine the current standoff distance.

The method described above may be performed by a controller. The controller may form part of a module, component, or unit of the automated welding system. The controller may form part of a workpiece monitoring system or a standoff distance measurement unit. Alternatively, the method may be performed by a distributed system.

The steps of the method may be performed while the workpiece is being additively manufactured. The automated welding system may be controlled based on the current standoff distance and predefined standoff distance by the controller or a further, central controller of the automated welding system.

The method may further comprise controlling a material feed unit to output a material onto the substrate and the workpiece. The steps of the method described above may be performed while the material feed unit is outputting the material. The method may comprise controlling the welding tool to cause the material to be melted onto the workpiece or the substrate. The material feed unit and/or the welding tool may be controlled based on the current standoff distance. The steps of the method described above may be performed while welding tool is being controlled.

The method may comprise receiving the current standoff distance and controlling the mover. The method may comprise comparing the current standoff distance and the predefined standoff distance. A difference may be determined between the current standoff distance and the predefined standoff distance, and the mover may be controlled based on the difference. The mover may be controlled to maintain or achieve the predefined standoff distance based on the difference. The difference may represent an error value between the two standoff distances. The mover may be controlled based on a control signal or a plurality of control signals received from the further controller.

The method may comprise receiving or determining, by the further controller, the predefined standoff distance. The predefined standoff distance may be determined before the current standoff distance is determined, or before the data is received.

In some examples, the machine-learned model may be configured to determine the current standoff distance. The machine-learned model may output the current standoff distance.

The computer-implemented method above is described for a single section of the workpiece. The computer-implemented method may be performed for a plurality of sections of the workpiece. In other words, the computer-implemented method may be performed for at least a first section of the workpiece and a second section of the workpiece. The method may further comprise generating a three-dimensional model of at least part of the workpiece based on the one or more geometric properties. The method may comprise determining a profile measurement for each section and generating the three-dimensional model based on the profile measurement. The sections may therefore be adjacent or contiguous along the workpiece. The three-dimensional model may be used to determine one or more defects or for quality control. The model may be stored in memory.

When the computer-implemented method is performed for a plurality of sections, the method may be repeated sequentially. Alternatively, there may be some partial overlap. For example, further data may be obtained while the machine-learned model is determining the desired component for initial data, and the machine-learned model may determine the desired component of the further data while the one or more geometric properties are being determined for the initial data. In some examples, a plurality of machine-learned models may operate in parallel. This may be made possible by the use of a single-stage, instance segmentation model.

According to a second aspect, there is provided a controller. The controller comprises: at least one processor; and memory storing instructions, that when executed by the at least one processor, cause the controller to perform a method as described above.

The controller may comprise the machine-learned model. The machine-learned model may be stored in the memory. The machine-learned model may alternatively be stored separately from the controller, such as at a separate controller or in a remote system.

According to a third aspect, there is provided a workpiece monitoring system comprising the controller described above, a signal detector, and a signal emitter. The workpiece monitoring system may be referred to as a standoff distance measurement unit. The processor may be configured to obtain the data from the signal detector. The signal emitter may be an optical emitter. The signal emitter may be a scanning signal emitter. The signal detector may be an optical detector. The signal detector may be a scanning signal detector.

The workpiece monitoring system may comprise a laser triangulation system or a laser line scanner (LLS). The workpiece monitoring system may perform real-time monitoring, reading, and/or interrogation of the workpiece or the substrate. The unit may monitor bead profile or workpiece shape. Said monitoring may be performed as the workpiece is moved past the directed energy source (e.g. plasma torch), or vice versa.

Control of the current standoff distance to achieve the predefined standoff distance may be performed by a feedback controller. The feedback controller may responsively and dynamically control the standoff distance (e.g. raise or lower directed energy source relative to workpiece or vice versa) in real-time based on data from the workpiece monitoring system.

According to a fourth aspect, there is provided an automated welding system comprising a controller or a workpiece monitoring system as described above, the automated welding system may further comprise a further controller and a mover. The controller may be configured to receive a current standoff distance and to operate the mover to achieve a predefined standoff distance between a welding tool and the workpiece based on the current standoff distance. The automated welding system may be an additive manufacturing system. The additive manufacturing system may be a directed energy deposition additive manufacturing system. The automated welding system may further comprise at least one of: the welding tool, such as a directed energy source; a substrate on which the workpiece is provided; and the workpiece. The automated welding system may comprise a material feed unit. The further controller may be configured to cause the material feed unit to output material and the welding tool to melt the material onto the substrate so that the workpiece is thereby welded on the substrate. A workpiece monitoring system or a controller may be configured to perform the steps of the method while the workpiece is being additively manufactured.

The controller may comprise logic configured to cause the steps described above to be performed.

According to a fourth aspect, there is provided a computer program product comprising instructions, that when executed by a computer, cause the computer to carry out a method as described above.

According to a fifth aspect, there is provided a computer-readable medium comprising instructions, that when executed by a computer, cause the computer to carry out a method as described above.

According to a sixth aspect, there is provided a workpiece manufactured at least in part using the method described above.

The aspects described above enable improved monitoring of a workpiece and control of an automated welding system, which can be responsive, dynamic, and/or in real-time.

The above technologies can enable automatic measurement, evaluation, and responsive and dynamic control in real-time of workpieces (e.g. aerostructures, marine structures, vehicular parts, medical devices, firearms, cutlery) via metals (e.g. titanium, aluminium) or metal alloys (e.g. Ti6Al4V, Inconel variants, etc.) using plasma arcs (e.g. RPD^{®}) or other forms of directed energy or sources used during automated welding.

An advantage of these technologies is to have an objective inline/in-situ automated system for workpiece monitoring, and specifically one that can be used for real-time processing to enable manufacturing tasks to be performed responsively and dynamically to geometric properties of the workpiece. Such tasks may include responsive and dynamic control in real-time of a standoff distance that provides at least some consistent plasma arc (or other forms of directed energy) characteristics, such as power, pressure, shape, and energy distribution across machines and over time, reduces scrap rate, enables early detection of unacceptable deviations, shortens part development cycle, and others. These technologies can be used with any type of motion system (e.g. computer numerical control, robot manipulators).

### Description of figures

The drawings, together with the detailed description, serve to explain various principles of this disclosure.
FIG. 1 shows an example of a directed energy deposition additive manufacturing system inclusive of a laser line scanner reading a substrate and a geometric profile of a workpiece on the substrate.
FIG. 2 shows an example image captured by a laser line scanner including reflections from the workpiece.
FIG. 3 shows a flow chart of a method for monitoring a workpiece being manufactured using an automated welding system and for achieving a predefined standoff distance between a welding tool of the system and the workpiece.
FIG. 4 shows example input and output image data of a machine-learned model for determining a desired component of data relating to a workpiece.
FIG. 5 shows a process for training a machine-learned model for determining a desired component of data relating to a workpiece.
FIG. 6 shows a diagram of operations performed by a workpiece monitoring system.

### Detailed description

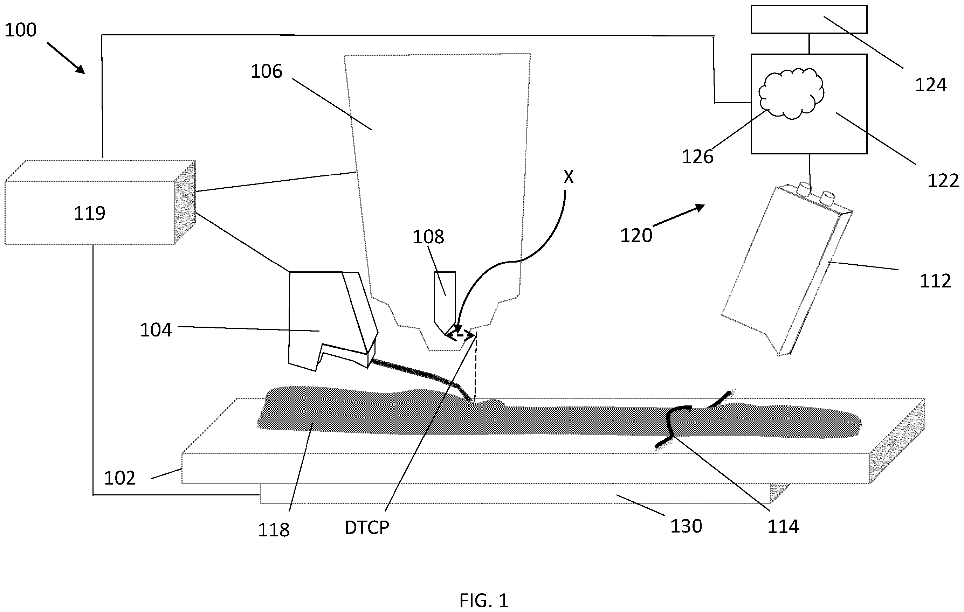

FIG. 1 shows an example of an automated welding system, which in this example is an additive manufacturing system 100. The aspects described herein can also be applied to other automated welding systems.

The additive manufacturing system 100 includes a workpiece 118 and a substrate 102 supporting the workpiece 118. The additive manufacturing system may be referred to as a directed energy deposition additive manufacturing system, because it uses directed energy deposition and a directed energy source.

The additive manufacturing system 100 includes: a controller 119, which can be a programmable logic controller (PLC), an industrial PC (IPC), or others; a material feed unit, in the form of a wire source 104, which is connected to a wire feeding system (not shown in the Figures) and is controlled by the controller 119; and a welding tool, which in this example is a directed energy source in the form of a plasma torch 106, which is controlled by the controller 119 and which hosts an electrode 108.

The wire source 104 is controlled by the controller 119 to feed a wire from the wire feeding system onto the workpiece 118. The plasma torch 106 generates a plasma arc, which is a form of directed energy, toward the workpiece 118 in operational proximity of the wire source 104. The plasma arc is transferred from the electrode 108 to the wire. The plasma arc melts the wire onto the workpiece 118, so that the workpiece 118 can be additively manufactured layer by layer using the wire. A plurality of droplets are formed from the wire being melted via the directed energy (e.g. plasma arc) such that the droplets are deposited, positioned, layered, cascaded, or fall onto the workpiece 118 in order to additively form or additively extend the workpiece 118, layer-by-layer.

Characteristics of the plasma arc are controlled to achieve a plasma resistance at the wire and workpiece, so that the wire is melted onto the surface of the workpiece. Additionally, to manufacture the workpiece 118, the wire is moved across a surface of the workpiece 118. Accordingly, to achieve said plasma resistance and to enable the workpiece 118 to be manufactured, a mover 130 is provided that moves the substrate 102, and therefore the workpiece 118 relative to the wire source 104 and the plasma torch 106. The substrate 102 is moveable horizontally and vertically relative to the wire source 104 and plasma torch 106, while the wire source 104 and plasma torch 106 remain stationary. In other examples, the wire source 104 and plasma torch 106 may be moveable relative to the substrate 102 by one or more movers. In some examples, multiple movers may be provided.

In some examples, the directed energy may be transferred from the electrode 108 to the substrate 102 or to both the substrate 102 and workpiece 118 simultaneously (e.g. using multiple plasma arcs), rather than to the workpiece 118. To provide multiple plasma arcs, the system 100 may further include a secondary directed energy source. The secondary directed energy source can include an electrode (or another energy output support device), which can be a preheater electrode (or another energy output support device) preheating the substrate 102, which may be relatively cool, before additive manufacturing of the workpiece 118 begins via the directed energy source 106 and the wire source 104. When included, the directed energy source can be positioned between the LLS 112 and the directed energy source 106 along the horizontal axis.

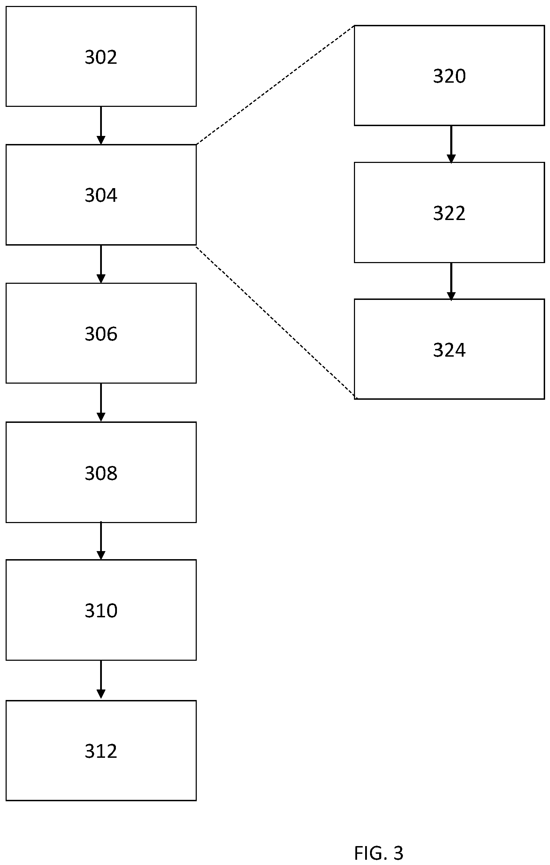

The system 100 includes a workpiece monitoring system 120, which may also be referred to as signal scanner system, a standoff distance monitoring and control unit, or a standoff distance measurement unit. The workpiece monitoring system 120 comprises a laser line scanner (LLS) 112, a processor 122 connected to the LLS 112, and a memory 124 connected to the processor 122. The workpiece monitoring system 120 is configured to perform a method in which geometric properties of the workpiece 118 are determined, as will be explained in more detail with reference to FIG. 3 below. The geometric properties are subsequently used to determine and control a current standoff distance between the workpiece 118 and the plasma torch 106.

The workpiece monitoring system 120 utilizes a machine-learned model or algorithm 126 as part of said method. The machine-learned model 126 is depicted as being part of the processor 122 in FIG. 1, but may be provided within the memory 124 or elsewhere in other examples. The workpiece monitoring system 120 is configured to determine the one or more geometric properties and, in this example, to determine a current standoff distance, which it subsequently provides to the controller 119 for use in controlling the mover 130 so that a predefined standoff distance is achieved and/or maintained between the workpiece 118 and the plasma torch 106. In other examples, as is explained below, the workpiece monitoring system 120 may be configured to determine other distances or features of a workpiece, such as weld beads, weld grooves, or defects. Geometric properties and features determined by the workpiece monitoring system 120 may be used to provide more accurate and precise control of an automated welding system in any desired way according to known methods, or to provide monitoring of a workpiece without automated welding control, such as quality or defect control.

Returning to FIG. 1, the LLS 112 includes a signal emitter, in the form of a laser source that generates a laser beam, and a signal detector, in the form of an optical camera that reads a plurality of reflections of the laser beam from the workpiece 118. The optical camera and laser source are arranged in a fixed geometrical relationship. The laser source and optical camera are not depicted in FIG. 1 to preserve clarity. The LLS 112 projects an optical signal, which in this example is laser pattern 114, via the laser source, onto the workpiece 118 and the substrate 102.

The workpiece 118 has a geometric profile, which can be vertically or horizontally varying or geometrically contoured or vertically or horizontally contoured. The geometric profile is an example of geometric property that can be determined by the system 120. The geometric profile may comprise physical positions and/or distances of points on the workpiece within a common reference system or relative to a reference point.

The LLS 112 projects the laser pattern 114 onto a section of the surface of the workpiece 118, such that the LLS 112 optically illuminates the geometric profile of that section of the workpiece 118. The LLS 112 can then employ the camera to capture images to enable the reflections from the laser pattern 114 to be read.

The workpiece monitoring system 120 can include more than one LLS 112. An additional LLS 112 can be used to optically read the substrate 102 or to optically read a geometric profile of the workpiece 118 from another view or angle. For example, the laser patterns 114 can be perpendicular to each other, parallel to each other, or L-shaped, or U-shaped, or O-shaped, patterns can be single line, multiline, single spot, multi spot, random spots, random patterns, pulsed, non-pulsed, or others. For example, more than one LLS 112 can be used depending on different scenarios, different read offsets both along X and Y from a leading tip of the electrode 108 might be required when measuring the standoff. Moreover, when the additive manufacturing system 100 involves plasma arcs, since the plasma arcs may have an impact on quality of measurements of the LLS 112, then at least some measurements or calibrations of the LLS 112 can be made when plasma arcs are off to avoid measurement inaccuracies.

The processor 122 receives data from the LLS 112, and particularly from the optical camera of the LLS 112. The data relates to the surface of the workpiece 118 and includes a reflection of the signal emitted by the signal emitter indicating the section of the workpiece 118.

The processor 122 uses the machine-learned model 126 to determine a desired component of the data received from the optical camera. The machine-learned model 126 is a model that is trained to determine the desired component utilizing a convolutional neural network, and in this example is an image segmentation model, specifically an instance segmentation model. Accordingly, the machine-learned model 126 receives input image data relating to the workpiece 118 and performs instance segmentation to identify at least the desired data component of the data, which in this case is a reflection of the laser pattern 114 from the surface of the workpiece 118.

Instance segmentation can provide pixel-level segmentation, associating each pixel with a specific object instance. The segmentation process begins with object detection, where objects are identified and localized within the image using bounding boxes. These bounding boxes serve as input for the region proposal network (RPN), which generates candidate object regions. During segmentation, class labels and binary masks are assigned to each pixel within the proposed regions, allowing for precise delineation of object boundaries. Alternatively, instance segmentation may be performed without utilizing a region proposal network. Instead, object detection and classification may be performed together, in a single pass through the neural network. Machine-learned models operating without region proposal may be referred to as one-shot, one-stage, or single stage models. Such models may achieve outputs even more quickly and with less computation, which is particularly useful in the setting of FIG. 1 where fast, real-time processing is required.

The model 126 may identify distinct instances of reflected light from the workpiece 118 and categorise them accordingly, thereby allowing the desired component, the reflection of the laser pattern 114, to be predicted and output by the model 126.

Based on the desired component of the data, the processor 122 determines one or more geometric properties of the workpiece 118. In the example of FIG. 1, the processor 122 determines the current standoff distance between the plasma torch 106 and the workpiece 118 based on the desired component of the data.

Specifically, the processor 122 performs a profile measurement of the section of the workpiece 118 illuminated by the laser pattern 114. The profile measurement is performed by identifying the location of a reflection of the signal in the data from the optical camera. From these locations, a plurality of physical positions of points along the profile are determined. The physical positions comprise a vertical distance and a horizontal distance from a reference point of the LLS 112. These geometric properties of the section of the workpiece together form the profile.

The profile can subsequently be analysed to determine further geometric properties. For example, physical positions of the points relative to other components within the system 100 can be determined based on the physical position relative to the reference point of the LLS 112 and a position of the LLS 112 relative to the other component. Other properties can also be determined, such as a highest point of the plurality of points. The highest point is the point with the smallest vertical distance from the reference point. The highest point can be used as a standoff point, from which a current standoff distance between a welding tool, such as the tip 108, and the workpiece 118 is determined. The current standoff distance may be a vertical distance between the highest point and the tip 108.

Once the current standoff distance has been determined, it is provided to the controller 119. The controller 119 uses the current standoff distance to operate the mover 130 so that a predefined standoff distance can be achieved or maintained. By achieving or maintaining the predefined standoff distance by operating the mover 130, it is meant that the mover 130 is operated so that the current standoff distance is or becomes equal to the predefined standoff distance. For example, if it is determined by the controller 119 that the current standoff distance is equal to a predefined standoff distance, then the controller 119 is configured to operate or control the mover 130 to maintain the same position of the workpiece 119. This may be achieved by sending control signals to the mover 130 with a position setpoint that is the same as the current position setpoint. If the current standoff distance differs from the predefined standoff distance, the controller 119 is configured to operate or control the mover 130 to move the workpiece 118 so that the predefined standoff distance is achieved. For example, the controller 119 may determine a difference value between the current standoff distance and the predefined standoff distance and control the mover 130 to move by the difference.

The current standoff distance can be a distance measured between a tool centre point and a point on the workpiece 118 along the vertical axis. The tool centre point (TCP) can both be defined statically based on tool mechanics (e.g. tip of the electrode 108, or point at end at origin of directed energy source (e.g. plasma arc)) or offset dynamically (e.g. computed in real-time based on process variables, such as wire speed, arc angle, deflection, shape in a scenario to offset point of interest to section where droplets meet workpiece 118 rather than under electrode tip). This point is referred interchangeably as TCP or DTCP hence forth. In FIG. 1, the DTCP is offset from the electrode by a distance X.

The substrate 102, and therefore the workpiece 118, can be moved by the mover 130 in the 3D space using an X-axis (e.g. length), a Y-axis (e.g. depth), a Z-axis (e.g. height), a C-Axis (e.g. rotation XY plane), and/or a B-Axes Rotation (e.g. XZ or YZ planes). The vertical axis can be referred to as the Z-axis. The geometric profile of the workpiece 118 can vary along the X-axis, the Y-axis, or the Z-axis, whether gradually or suddenly. When the additive manufacturing system 100 avoids the electrode 108 or supplements the electrode 108 with another energy output device (e.g. flame torch), then the standoff distance can be measured between the DTCP (e.g. central portion) of the energy output device and the workpiece 118 along the vertical axis. For example, the DTCP can be vertically above and in a same Z plane as an electrode tip or other energy support device above a point where at least some droplets land.

The current standoff distance can be dynamically maintained within various defined limits to achieve consistent plasma arcing conditions (e.g. voltage, power, temperature distribution) from the electrode 108. As such, the workpiece monitoring system 120 enables automatic measurement and responsive and dynamic control in real-time of the standoff distance.

While it is described that the mover 130 moves the substrate 102 vertically to alter the standoff distance, this can also be achieved via a vertical movement of the electrode 108 (e.g. up, down, toward workpiece 118 or substrate 102, away from workpiece 118 or substrate 102) relative to an extracted point from a section on the substrate 102 below the TCP/DTCP or an extracted point from a section on the geometric profile of the workpiece 118 below the TCP/DTCP. For example, the directed energy source 106, together with the electrode 108, can vertically move relative to the extracted point from the section on the substrate 102 below the TCP/DTCP or the extracted point from the section on the geometric profile of the workpiece 118 below the TCP/DTCP as the substrate 102 moves the workpiece 118 in the 3D space.

The additive manufacturing system 100 runs a program (e.g. executable code, list of numerical control (NC) values, markup code, delimited text, populated spreadsheet) which among others sets various parameters of the workpiece monitoring system 120 and controller 119, such as standoff distance set point (i.e. the predefined standoff distance), set value trajectories, control modes, control enable, measurement offsets, read offsets, or others. The workpiece monitoring system 120 and controller 119 responsively and dynamically in real-time maintain the current standoff distance between the TCP/DTCP and the workpiece based on the geometric profile of the workpiece 118 and the predefined standoff distance. The current standoff distance may be between the TCP/DTCP and a highest point on the workpiece 118 below the TCP/DTCP, a lowest point of the workpiece 118, or an average of the highest and lowest points of the workpiece 118, within a specific region centred around various specified read offsets. The workpiece monitoring system 120 and controller 119 are able to dynamically and responsively maintain in real-time or dynamically and responsively adjust in real-time the standoff distance based on the LLS 112 optically reading (e.g. camera reading laser beam reflections) the substrate 102 and the workpiece 118, via the laser pattern 114 laterally extending along or traversing the substrate 102 and the workpiece 118, and then vertically moving the electrode 108 relative to the substrate 102 or the geometric profile of the workpiece 118 dynamically responsive to the geometric profile of the workpiece 118 satisfying or not satisfying a predefined threshold (e.g. set numerical value) associated with the standoff distance. For example, the laser pattern 114 can be perpendicular to a bead cross-section forming the workpiece 118 and a central portion of the laser pattern 114 can be a point of interest for a height measurement. The laser pattern 114 can be projected dynamically below the TCP/DTCP at a point of interest for distance measurement, at a fixed position ahead of the TCP, or at a fixed position behind the TCP. In a scenario, where the laser pattern 114 is not exactly below the TCP/DTCP, the extracted standoff distance data may be attached with workpiece position information and to be stored (e.g. buffered in grid), so that a standoff control system can retrieve at least some values from a storage (e.g. memory) when the TCP/DTCP is at the point of interest to maintain the standoff distance.

The workpiece monitoring system uses the LLS 112 (or another laser based triangulation system) to optically measure the standoff distance and, optionally, then responsively and dynamically in real-time cause the mover 130 to vertically move the substrate 102 along the Z-axis (e.g. up, down) relative to the plasma torch 106. This functionality enables the mover 130 to dynamically and responsively keep, maintain, or adjust in real-time the standoff distance via a control function which runs on the controller.

The additive manufacturing system 100 can receive a file of a design of the workpiece 118, such as a computer-aided design (CAD) file or others, and a spool of the wire via the wire source 104, and produce the workpiece 118, which can be aerospace-grade or others, based on a specific workpiece geometry, as extracted from the file of the design of the workpiece 118. The additive manufacturing system 100 can include a chamber filled with an inert gas, such as argon, helium, xenon, krypton, or combinations thereof. As such, the substrate 102, the wire source 104, the directed energy source 106, the electrode 108, the laser line scanner 112, the laser pattern 114, and the workpiece 118 can be positioned within the chamber.

In one mode of operation, the standoff distance can be a distance between the DTCP to the workpiece 118 along the vertical direction. The standoff distance is kept within defined limits to achieve consistent arcing conditions. The standoff monitoring and control system enables automatic measurement and control of the standoff distance. Note that an RPD^{®} program defines various parameters of the additive manufacturing system 100 (e.g. standoff distance set point, control modes, control enable, measurement offsets, read offsets). additive manufacturing system 100 then keeps the standoff distance between the DTCP and a highest or a lowest point on the workpiece 118 within a specific region centred around some specified read offsets. The additive manufacturing system 100 uses the LLS 112 mounted in front of the electrode 108 to measure the standoff distance and uses the mover to keep the standoff distance with a help of a control function which runs on a master logic controller of the additive manufacturing system 100.

In one mode of operation, the additive manufacturing system 100 can be configured for standoff monitoring and control in layer 0 (measurements are to be made on the substrate) and based on a small average distance (around about 0-10mm in length) at start of a string before deposition. The additive manufacturing system 100 can be configured for standoff monitoring and control over an entire deposition length of strings, either with arc on or by scanning when returning to deposit a next string (without major impact on the part deposition schedule or process). The additive manufacturing system 100 can be configured for inline shape monitoring and standoff estimation. This can be done based on a model of the bead/string including overlaps and laser measurements, while providing a user interface to monitor and find deviations from model and log the entire shape of the deposited strings.

Standoff distance control may be performed as described in U.S. Patent Application No. 16/920175, the contents of which are herein incorporated by reference in their entirety.

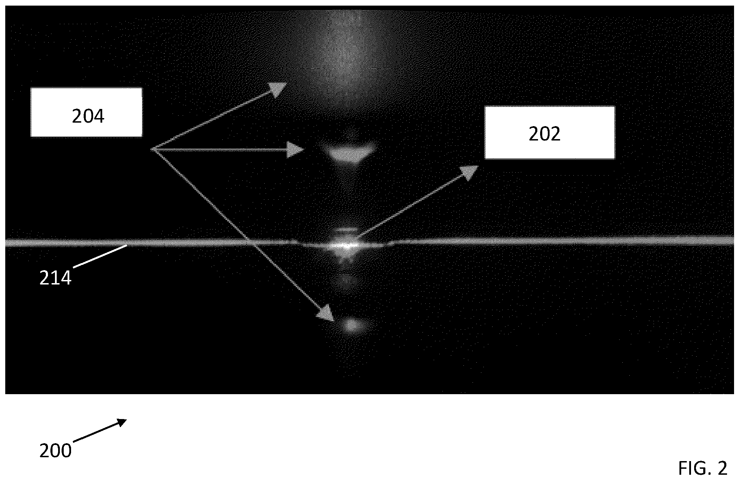

An example of image data 200 obtained by the LLS 112 is depicted in FIG. 2. The image data 200 includes a laser pattern 214 that is projected onto and reflected from the workpiece 118. The laser pattern 214 is a desired component of the image data 200 because it can be used to determine a profile of the workpiece 118, and therefore determine the current standoff distance. The image data 200 also includes a plurality of further reflections 202, 204. The further reflections 202, 204 are reflections of light from the workpiece. Metals display strong reflections, which can either saturate the sensor readings and may result in bright spots in the image data. Reflections can be due to high laser light intensity or may be due to light from a directed energy source such as a plasma or flame torch being used to manufacture the workpiece.

A first set of reflections 202 are specular reflections. Specular reflections are direct reflections from a surface. A second set of reflections 204 are caustic reflections. Caustic reflections occur when light is reflected from a specular surface and then from a diffuse surface before reaching the camera. Both specular reflections and caustic reflections may cause errors in determining where the laser pattern 214 is, by distorting part or all of the pattern 214 or by causing artefacts that may be interpreted as being part of the pattern 214 by logics configured to pick them out. Caustic and specular reflections may also saturate image data, making it difficult to identify the pattern 214. Such reflections may therefore be referred to as noise within the image data.

As described in FIG. 1, a machine-learned model can be used to identify the desired component of the data, which desired component can subsequently be used to determine geometric properties of the workpiece and provide improved control of the system. A flow chart is depicted in FIG. 3 that governs such a method 300, where the control comprises controlling a standoff distance, as described in relation to FIG. 1.

In the method 300, at step 302 a signal emitter is caused to emit an optical signal onto a surface of a workpiece, the optical signal indicating a section of the surface of the workpiece, and data relating to the surface of the workpiece is gathered by a signal detector and provided to a processor. The signal emitter may be the laser source of the LLS 112 and the signal may be a laser line as described in relation to FIG. 1. The signal detector may be the optical camera of the LLS 112 as described in relation to FIG. 1. The data may comprise image data, such as one or more images of the workpiece 118. The data detected by the signal detector comprises a reflection of the signal from the surface of the workpiece. The data may include one or more other reflections, as described in relation to FIG. 2.

At step 304, a machine-learned model is used to process the data received at step 302 and to determine a desired component of the data. As noted above, the machine-learned model may be an image segmentation model, and may specifically be an instance segmentation model, particularly where image data is the data received from the signal detector. The machine-learned model may be a single-stage model, which may improve the speed with which the desired component of the data can be determined.

As shown in FIG. 3, step 304 can be split into three further steps, 320, 322, 324. At step 320, the data received at step 302 is provided to the machine-learned model. Step 320 may also include formatting or pre-processing the data received at step 302 into an appropriate format for use as input data by the machine-learned model.

At step 322, the machine-learned model performs analysis or processing of the data. In other words, the data is passed through the trained model, and particularly through the convolutional neural network, to perform said processing. The machine-learned model may be a single-stage model as indicated above, or may comprise a single-stage model that performs instance segmentation or image segmentation. The model may comprise multiple different models or networks that perform different functions.

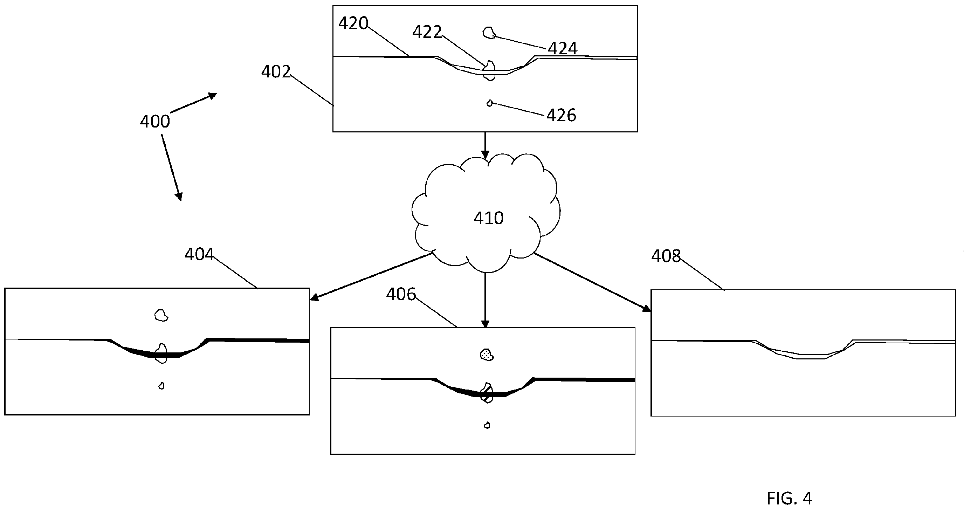

At step 324, the machine-learned model provides one or more outputs. The outputs include, at least, an indication of the desired component of the data. The output may include the data provided as input to the machine-learned model and the indication of a location of the desired component of the data within the data. The location may comprise a plurality of pixel coordinates. The machine-learned model may provide said indication in one or more different ways, as will be explained in relation to FIG. 4. For example, the outputs may comprise filtered or annotated data, or measurement data. The machine-learned model may be configured to output data in a particular format that can be used to determine the current standoff distance. The machine-learned model may be configured to output indications of undesired components of the data also. For example, the machine-learned model may be configured to identify the plurality of components of the data comprising desired and undesired components and to associate a bounding box or segmentation with each as well as a confidence score. The desired component of the data may be indicated with the highest score.

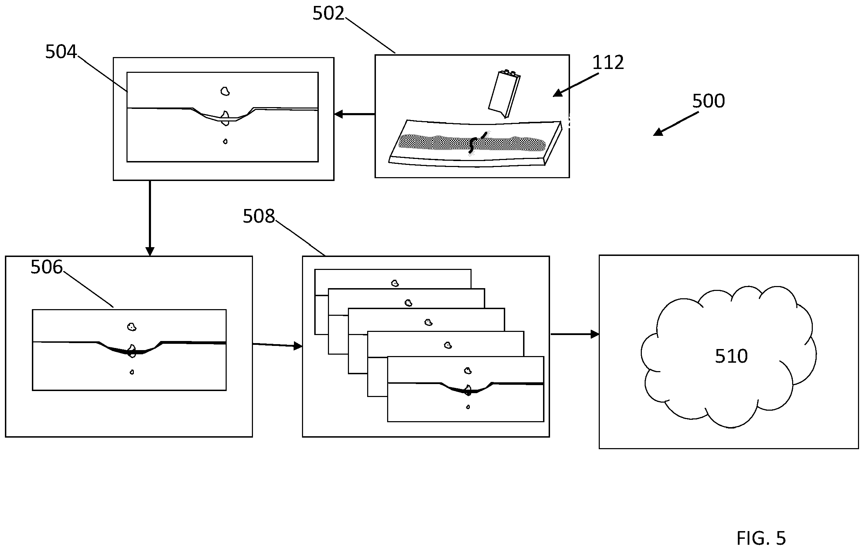

The machine-learned model may be trained prior to step 302, at step 301. Training the machine-learned model may include obtaining data relating to a plurality of sections of at least one workpiece from a signal detector, labelling the data to indicate desired components of the data, and training the machine-learned model using the labelled data. The data may be image data comprising a plurality of image frames. The labels may be received from an operator via an input device. The training may comprise supervised learning. The data may be obtained during manufacturing of the workpiece. Training is described in more detail in relation to FIG. 5.

Returning to the main method 300, at step 306, having determined the desired component of the data in step 304, one or more geometric properties are determined. The geometric properties that are determined depend on the purpose of monitoring the workpiece. For example, the geometric properties may be determined to provide standoff distance control, as described above, and so may be different to the geometric properties that are determined to provide defect detection or quality control.

For the method 300, the geometric properties are determined to provide standoff distance control. Accordingly, in step 306, one or more geometric properties are determined by determining pixel locations within the data output by the machine-learned model for the desired component of the data, and determining physical positions of those pixel locations relative to the signal detector or a reference point associated therewith. For each of the physical locations, a further position or vertical distance from a welding tool for which a standoff distance is to be determined can be determined. A standoff point can be determined from these further positions or distances, which is a point with a shortest vertical distance to the welding tool, and then the current standoff distance, i.e. the vertical distance of that point from the welding tool, can be determined.

At step 308, once the current standoff distance has been determined, it is provided to a controller, such as controller 119 of FIG. 1, for use in achieving a predefined standoff distance. The predefined standoff distance may be received by the controller in the same step, may be received by the controller prior to step 308, or may be determined by the controller based on other measured parameters at the point in time for which the current standoff distance is determined.

Steps 302 to 308 may be performed by a workpiece monitoring system such as the workpiece monitoring system 120 of FIG. 1.

At step 310, therefore, the controller determines a control signal for controlling a mover that enables relative movement between the workpiece and the directed energy source, such as the plasma torch. The control signal may be determined to cause the mover to move so that the current standoff distance is changed or maintained to equal the predefined standoff distance. The control signal may indicate how much the current standoff distance needs to change by, or may indicate a position for the mover that would correspond to moving the current standoff distance to equal the predefined standoff distance. The control signal may be determined based on a difference or an error value determined between the current standoff distance and the predefined standoff distance. If it is determined that the current standoff distance and the predefined standoff distance are already equal, i.e. there is no error value or difference, then a control signal indicating no movement may be sent to the mover or no control signal may be sent.

At step 312, the method 300 comprises the mover implementing the control signal. The steps 302-312 of the method 300 may be performed iteratively or repeatedly. For example, data may be detected at a sampling rate and provided to a workpiece monitoring system as it is detected. The method 300 may be performed for each sampling of data, such that the standoff distance is monitored over time. The method 300 may be performed while the controller is also controlling other features of the system, such as the material feed unit or directed energy source.

FIG. 3 provides a method relating to determining and controlling a standoff distance, but in other examples steps 302 to 306 may be performed and the determined geometric properties may be used for other purposes. For example, the one or more geometric properties may be determined for the purpose of identifying a weld bead or weld groove, identifying features of a weld bead or weld groove, or for defect detection. Further control of the mover or other elements of the system may be provided based on such identifications or detections.

In other examples, such as for defect detection, the physical positions of a plurality of points on the section may be determined to form a profile of the workpiece. The profile may be compared to an expected shape or expected positions for the points or further analysis object classification may be performed to identify a particular shape within the profile of the workpiece. For defect detection or quality control, it may be determined whether the shape of the profile matches the expected shape. For other examples, identified shapes may be used to identify features of the workpiece, such as a weld bead or weld groove, and further properties of the weld bead or groove may be then identified. Control of the automated welding system may be provided dependent upon identifying such a feature. Some or all of the geometric property determination may be performed by a further machine-learned model, which may be a classification model.

FIG. 4 provides examples of data 400 associated with a machine-learned model 410, and particularly image data. The data 400 includes an input image 402, shown being input into the machine-learned model 410, and three example output images 404, 406, 408 from the machine-learned model 410. The output images 404, 406, 408 and input image 402 are shown as images for the purpose of illustration in this example. The machine-learned model may receive input data in the form of an image and output data in the form of an image. Alternatively, the input and output data may be other forms of data that can form an image.

As can be seen in FIG. 4, the input image 402 has four different reflections. A first reflection 420 is a laser pattern emitted by a laser emitter. A second reflection 422 is a specular reflection obscuring a central part of the first reflection 420. A third and fourth reflection 424, 426 are caustic reflections.

The machine-learned model 410 is configured to receive input image data such as image 402 and to output data that indicates at least desired components of the input image 402. In this example, the desired component is the first reflection 420, because it can be used to determine a current standoff distance.

The machine-learned model 410 may provide output data comprising the original input image data 402 and an indication of the desired component of the data, which is the first reflection 420.

The indication may comprise an annotation as shown in the first output image 404 of FIG. 4. The annotation or the indication may comprise a plurality of pixel coordinates within the image data of the desired component of the data.

In some examples, the output data may comprise the input image data 402 with each of the plurality of components, i.e. reflections, within the input image 402 being identified and indicated with an annotation, as is shown in the second output image 406. In this example, the annotation is a different highlighting pattern, although in other examples annotation may be achieved using different colours or using labels. In some examples, a combination of these may be used.

Alternatively, the machine-learned model 410 may output filtered data, such as the third output image 408. In other words, the machine-learned model 410 may filter the input data to separate the desired component of the data, namely the reflection 420, from the undesired components of the data, namely reflections 422, 424, and 426. The machine-learned model 410 may provide the desired component alone, or may filter the input data to remove the undesired components, i.e. to filter out unwanted reflections, as is shown in FIG. 4 in output image 406. As a yet further alternative, the output from the machine-learned model 410 may be a combination of filtered and annotated data (not shown in FIG. 4). The undesired components, reflections 422, 424, 426, may be filtered out, and the desired component, reflection 420, may be highlighted to further differentiate it from the background.

In some examples, the output from the machine-learned model 410 may include or may be one or more values associated with the desired component of the data, such as coordinates or relative positions of pixels associated with the reflection 420.

In some examples, the output data 404, 406, 408 may be generated or output from a separate model or component. For example, the machine-learned model 410 may output data in a first format, and the separate component may reformat that data into a second format, such as output data 404, 406, 408 for use by a controller or other components of the system.

FIG. 5 illustrates a process 500 illustrating how a machine learned model 510 may be trained to identify desired components of the data, such as reflections representing a laser pattern emitted by a laser source. Process 500 begins with data collection 502, in which data relating to workpieces is collected. As shown in FIG. 5, this may make use of an LLS 112 scanning a workpiece 518. The data may be collected during manufacturing of a workpiece or after the workpiece has been manufactured.

As part of data collection, data is collected such as image 504. The data is subsequently annotated or labelled to provide annotated data 506, here shown in the form of an annotated image. The annotated data 506 may be annotated to indicate the desired component of the data or to indicate both the desired component of the data and the undesired components of the data. Different annotations may be used to indicate desired and undesired components.

The annotated image 506 is stored with a plurality of other annotated images to form a training set 508. The training set can then be provided to a machine-learning algorithm to perform supervised training using the training set 508 and to generate the machine-learned model for determining desired components of the data.

As shown in FIG. 5, the annotation of images gathered from a laser line scanner may mark out or indicate the areas occupied by or the boundaries of particular reflections.

A training data set may comprise images or data relating to a single workpiece or to a plurality of workpieces. A training data set may include over 100 pieces of data, such as images, over 200 pieces of data, over 500 pieces of data, or over 1000 pieces of data. The training data set may be used wholly for training or partially for training and partially for validation of the machine-learned model.

In an example, a machine-learned model was trained using 1000 images collected from actual depositions during RPD^{®} printing. Based on the 98% accuracy of the true line prediction, the signal predicted by deep learning can be used for real-world applications, such as the RPD^{®} process, defect detection and quality control, and other automated welding operations.

To verify the effectiveness of such a machine-learned model as described above, a model was designed, trained, and verified by the inventors.

A training dataset was gathered consisting of over 1000 annotated images collected from a laser line scanner. The images included reflections of a laser pattern from a laser emitter of the laser line scanner from a workpiece, and related to a plurality of different workpieces. The images were annotated using the LabelMe annotation tool. Annotation comprised marking boundaries for the laser line, i.e. desirable components of the data were annotated in this experiment. In the training data set, the desired component was therefore annotated by marking boundaries, whereas the output of the machine-learned model once trained may annotate the desired component by indicating all locations, i.e. pixels, of the desired component within the data. Annotations were saved in the COCO JSON format.

A convolutional neural network (CNN) model was chosen. Specifically, a commonly available single-shot instance segmentation model, YOLOv8, was chosen and trained using the dataset. YOLOv8 detects objects and segments instances. To train the model, the annotated dataset was converted to a format suitable for input to YOLOv8 using a custom script. The suitable format included text files in a style corresponding to YOLOv8's input requirements for each image. 80% of the images in the training dataset were used for training, while 20% of the images were reserved for validation. Diversity and representation of different desired data components and undesired data components were ensured across the training and validation subsets. The model was then trained using the training images. Although a particular model was chosen for this example, in other examples other image or instance segmentation models may be used.

Validation provided results indicating high accuracy, quantified using the Precision, Recall, Accuracy, and the F1 Score parameters. Precision represents the ratio of true positives among all items predicted as positive. Recall indicates the ratio of true positives among all actual positives. Accuracy denotes the ratio of correctly predicted labels to the total number of images. The F1 Score, a measure of a test's accuracy, serves as a complementary metric to Accuracy. It is calculated as the harmonic mean of Precision and Recall, with a perfect score of 1 representing ideal Precision and Recall, and a score of 0 indicating the worst performance. True positives can be considered to be where the model's output and the annotated laser line for the image were the same.

The calculated parameters for the YOLOv8 model were as follows:

| | |
|---|---|
| Accuracy | 98.71 % |
| Precision | 90.01 % |
| Recall | 91.82 % |
| F1 Score | 90.90 % |

The high accuracy score of 98.71% indicates the robustness of the trained model in making prediction.

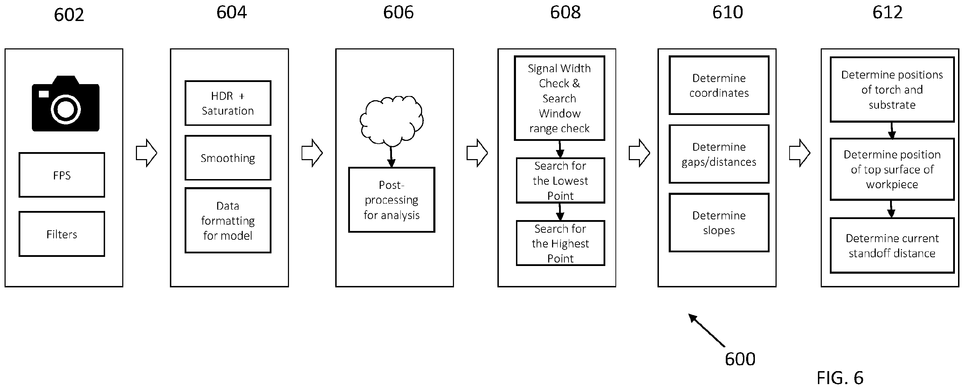

As noted in relation to FIGs. 1 and 3, once the machine-learned model has identified the desired component of the data, i.e. the laser pattern or line, one or more geometric properties can be determined. FIG. 6 illustrates how the workpiece monitoring system 120 may be operated to determine a current standoff distance .

FIG. 6 shows a set of operations 600 that may be performed by a workpiece monitoring system. The set of operations 600 includes a first subset 602, a second subset 604, a third subset 606, a fourth subset 608, a fifth subset 610, and a sixth subset.

The first subset 602 relates to the collection of data by the LLS 112. The first subset 602 involves control of parameters relating to the signal detector, such as read frames per second or camera level filters, camera exposure time and capture of the data. The signal detector, which is an optical camera in FIG. 1 may be controlled to capture images of the workpiece that can be input into the machine-learned model. The parameters of the signal detector may be pre-set or may be controlled on-the-fly in response to analysis of the images during manufacturing of the workpiece.

The second subset 604 of operations are performed once data has been collected. The second subset 604 of operations include pre-processing the data captured by the signal detector for input to the machine-learned model. The data is at least pre-processed so that it has the correct format for input into the machine-learned model. Additionally, image pre-processing may be performed, and these operations may include high dynamic range (HDR) image processing, image saturation processing, image smoothing, and other related image processing or data pre-processing operations. Such pre-processing may improve inputs to the machine-learned model. Pre-processing of the image may be optional in some examples, to prioritise speed.

The third subset 606 of operations includes providing the collected, formatted, and, optionally, pre-processed data to the machine-learned model as described above. The output of the machine-learned model may also be post-processed to at least provide a suitable format for analysis. For example, the machine-learned model may indicate locations of a plurality of pixels within the input image that are considered to represent the laser pattern. The fourth subset 608 of operations may involve processing the input image with regard to the output of the machine-learned model to identify the pixels indicated.

Once the pixels or data on which the current standoff distance is to be determined are identified, in the fourth subset 608, validation of the signal and identification of measurement points may be performed. Specifically, a signal width and a search window range may be checked and verified. A point on the laser line corresponding to a lowest point may be searched for and identified. A point on the laser line corresponding to a highest point may be searched for and identified.

In the fifth subset 610, various measurements may be determined relating to the substrate and the geometric profile of the workpiece relative to the substrate. These measurements can include coordinates of the highest and lowest points, gaps or distances between the highest point and lowest point, and slopes between the two points. The measurements may be determined for other points on the laser line other than the highest and lowest points so that a more complete geometric profile may be determined for the workpiece.

Subsequently, in the sixth subset 612 of operations, the measurements of the geometric profile may be utilized to determine the current standoff distance. A current position of the plasma torch and the mover are known, and therefore a distance between the mover and the plasma torch can be determined. As parameters of the substrate are also known, a position of the lowest point in the image data can be determined because the lowest point corresponds to the surface of the substrate. As the gap between the lowest and highest points of the image are known , and the highest point corresponds to an uppermost surface of the workpiece, a current position of the workpiece can be determined, and accordingly, by comparing current positions of the workpiece and the plasma torch, a vertical distance between the plasma torch and the workpiece, which is the current standoff distance can be determined.

The current standoff distance is subsequently sent to the controller. The other measurements may also be communicated to the controller. A further set of operations may be performed to validate the measurements, before they are communicated to the controller.

In some examples, the sixth subset 612 may be performed by the controller 119. The controller 119 may receive current positions for the torch and substrate and determine the current standoff distance based on the measurements it receives.

Having received or determined the current standoff distance, the controller 119 can apply a low-pass filter to perform smoothing, so that as to avoid sudden jumps in the current standoff distance. Similarly, the controller 119 receives or determines the predefined standoff distance from a program or set of parameters or measurements, and also performs smoothing using a low-pass filter.

The controller 119 then determines an error between the current standoff distance and the predefined standoff distance and generates a control signal, as described above, to control the mover to reduce the error.

Various aspects of this disclosure can be implemented in a data processing system suitable for storing and/or executing program code that includes at least one processor coupled directly or indirectly to memory elements.

This disclosure can be embodied in a system, a method, and/or a computer program product. The computer program product can include a computer readable storage medium (or media) having computer readable program instructions thereon for causing a processor to carry out aspects of the present disclosure. The computer readable storage medium can be a tangible device that can retain and store instructions for use by an instruction execution device.

Computer readable program instructions described herein can be downloaded to respective computing/processing devices from a computer readable storage medium or to an external computer or external storage device via a network, for example, the Internet, a local area network, a wide area network and/or a wireless network.

Computer readable program instructions for carrying out operations of the present disclosure can be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server.

It will be apparent to skilled artisans that various modifications and variation can be made in this disclosure without departing from a scope thereof. Thus, it is intended that this disclosure cover modifications and variations thereof, provided that such modifications and the variations come within a scope of the claims, as recited below, and their equivalents.

## Claims

1. A computer-implemented method (300) for monitoring a workpiece (118) being manufactured by an automated welding system (100), the computer-implemented method (300) comprising:
- causing (302) an optical signal to be emitted from a signal emitter (112) onto a surface of the workpiece (118), the optical signal (114) indicating a section of the workpiece (118);
- obtaining (302) data (200) relating to the surface of the workpiece (118) from a signal detector (112), the data (200) includes one or more reflections (202, 204, 214) from the surface of the workpiece;
- determining (304) a desired component of the data using a machine-learned model (126), wherein the desired component comprises a reflection (214) of the one or more reflections (202, 204, 214) that corresponds to the optical signal (114) indicating the section of the workpiece (118); and
- determining (306) one or more geometric properties of the section based on the desired component (214) of the data.

2. The computer-implemented method (300) of claim 1, wherein the machine-learned model (126) is an image segmentation model.

3. The computer-implemented method (300) of claim 2, wherein the machine-learned model (126) is an instance segmentation model.

4. The computer-implemented method (300) of claim 2 or claim 3, wherein the machine-learned model (126) is a single-stage model.

5. The computer-implemented method (300) of any preceding claim, wherein the optical signal (114) comprises a laser signal having a predefined geometric pattern, and the desired component comprises a reflection (214) of the predefined geometric pattern from the surface of the workpiece (118).

6. The computer-implemented method (300) of any preceding claim, wherein determining (304) the desired component of the data using the machine-learned model (126) comprises receiving, from the machine-learned model (126), the data and an indication of a location of the desired component of the data within the data.

7. The computer-implemented method (300) of any preceding claim, wherein the machine-learned model (126) is a first machine-learned model, and wherein the one or more geometric properties of the section are determined using a second machine-learned model.

8. The computer-implemented method (300) of any preceding claim, wherein determining (306) the one or more geometric properties of the section comprises:
- determining a physical position of each of a plurality of points on the surface of the section relative to a reference point based on the desired component of the data.

9. The computer-implemented method (300) of claim 8, wherein determining (306) the one or more geometric properties of the section further comprises:
- determining a feature of the section based on the physical positions of each of the plurality of points on the surface of the section.

10. The computer-implemented method (300) of claim 9, wherein the feature comprises at least one of:
- a point from which a current standoff distance is to be determined;
- a surface defect;
- a feature of a weld groove; and
- a feature of a weld bead.

11. The computer-implemented method (300) of claim 10, wherein the feature comprises the point from which the current standoff distance is to be determined, and wherein the method (300) further comprises:
- determining the current standoff distance between a welding tool of the automated welding system and the point; and
- providing (308) the current standoff distance to a controller for operating (310, 312) a mover to achieve a predefined standoff distance between the welding tool and the point based on the current standoff distance, wherein the mover is configured to move at least one of the welding tool relative to the workpiece and the workpiece relative to the welding tool.

12. A controller (122) comprising:
- at least one processor; and
- memory storing instructions, that when executed by the at least one processor, cause the controller to carry out the computer-implemented method of any preceding claim.

13. A workpiece monitoring system (120) comprising:
- the signal emitter;
- the signal detector; and
- the controller (122) of claim 12.

14. An automated welding system (100) comprising the controller (122) of claim 12 or the workpiece monitoring system (120) of claim 13.

15. A computer-readable medium comprising instructions, that when executed by a computer, cause the computer to carry out the computer-implemented method (300) of any of claims 1 to 11.
